Europäisches Patentamt

European Patent Office

Office européen des brevets

(19)

(11) Veröffentlichungsnummer: **0 133 441**
**B1**

(12) EUROPÄISCHE PATENTSCHRIFT

(45) Veröffentlichungstag der Patentschrift:
08.02.89

(51) Int. Cl.⁴: **G 11 B 23/033**

(21) Anmeldenummer: 83111124.0

(22) Anmeldetag: 08.11.83

(54) Schutzhülle für einen Informationsträger.

(30) Priorität: 23.07.83 DE 3326597

(43) Veröffentlichungstag der Anmeldung:
27.02.85 Patentblatt 85/9

(45) Bekanntmachung des Hinweises auf die Patenterteilung:
08.02.89 Patentblatt 89/6

(84) Benannte Vertragsstaaten:
AT BE CH DE FR GB IT LI LU NL SE·

(56) Entgegenhaltungen:
EP-A- 0 075 301
DE-A- 2 460 797
GB-A- 2 097 988

PATENTS ABSTRACTS OF JAPAN, Band 6, Nr. 179
(P-142) [1057], 14. September 1982; & JP - A - 57 94 965
PATENTS ABSTRACTS OF JAPAN, Band 6, Nr. 108
(P-123) [986], 18. Juni 1982; & JP - A - 57 37 782

(73) Patentinhaber: Firma Carl Freudenberg, Höhnerweg 4,
D-6940 Weinheim/Bergstrasse (DE)

(72) Erfinder: Buchwald, Holger, Graf-Zeppelinstrasse 2,
D-6944 Hemsbach (DE)
Erfinder: Hartwig, Peter, Dr.,
Hohensachsenerstrasse 21, D-6945 Hirschberg (DE)

(74) Vertreter: Weissenfeld-Richters, Helga, Dr.,
Höhnerweg 2, D-6940 Weinheim/Bergstrasse (DE)

ACTORUM AG

## Beschreibung

Die Erfindung betrifft eine abriebfeste Schutzhülle für einen Informationsträger, insbesondere für einen magnetischen Datenträger, mit einer Temperaturbeständigkeit von mehr als 100 °C. Die Schutzhülle besteht aus Vliesstoff.

Informationsträger, insbesondere flexible magnetische Datenträger, sogenannte Floppy disks, bestehen aus einer Magnetfolie, die beschichtet ist. Die Magnetfolie wird zum Schutz gegen mechanische Beschädigungen und insbesondere manuelle Berührung in einer Schutzhülle gelagert, die üblicherweise aus Papier, Kunststoff oder dgl. besteht. Es sind auch Schutzhüllen aus PVC-Folie bekannt, deren Innenseite mit einem Vliesstoff beschichtet ist. Hauptaufgabe des Vliesstoffes ist es, den während des Gebrauchs anfallenden Schmutz und die Staubpartikel aufzunehmen, ein niedriges, gleichmässiges Drehmoment des Datenträgers in der Hülle sicherzustellen und einen Schutz der Magnetfolie vor dem PVC sicherzustellen. Durch die grosse Anzahl kleiner aufrechtstehender Härchen des Vliesstoffes, mit dem die Innenseite der PVC-Hülle ausgekleidet ist, wird die Magnetfolie gleichzeitig gereinigt, wobei jedoch ein Verkratzen sicher vermieden wird. Die Härchen des Vliesstoffes bewirken auch eine gute Lagerung der Magnetfolie, denn bei der Entnahme und Wiedereinführung der Folie aus oder in die Schutzhülle biegen sich die Härchen in Richtung der Informationsträgerbewegung. Dadurch entsteht im gegensatz zu einer starren Folie oder einem festen Papier Auflagepunkte, die ein sanftes Gleiten gewährleisten.

Es sind auch schon Schutzhüllen aus reinem Vliesstoff bekanntgeworden, die die vorstehend geschilderten günstigen Eigenschaften aufweisen. Trotz der an sich guten Brauchbarkeit der Vliesstoffschutzhüllen hat es sich jedoch als nachteilig herausgestellt, dass die in dem Vliesstoff verwendeten Bindemittelgemische ungünstig auf die magnetfolie einwirken, wobei gegebenenfalls Zersetzungsprodukte auftreten. Insbesondere aber ist die Lagerung bei hohen Temperaturen problematisch. Derartige hohe Temperaturen treten aber bei Dauergebrauch der Informationsgeräte und auch bei Lagerung von Magnetträgern, z.B. Tonbändern in Kraftfahrzeugen, sehr leicht auf. Durch die hohe Temperatur, z.B. im Handschuhkasten eines Kraftfahrzeuges, werden dort gelagerte Tonbänder mehr oder weniger unbrauchbar, weil sie durch ungeeignete Schutzhüllen beschädigt oder sogar zerstört werden.

IP-A 5 794 965 beschreibt ein aufklebbares Innenteil für eine Plattenschutzhülle, das aus einer Mischung von Kunststoffasern und Kohlenstoff enthaltenden Kunstharzfasern hergestellt wird und eine nicht gewebte Struktur aufweist.

Der Erfindung liegt nun die Aufgabe zugrunde, eine abriebfeste Schutzhülle für Informationsträger, insbesondere für magnetische Datenträger, wie Tonbänder, Floppy disks oder dgl. zu entwickeln, die eine temperaturbeständigkeit von mehr als 100 °C aufweist und auch bei extremen Bedingungen, insbesondere bei hohen Temperaturen, die Informationsträger nicht negativ beeinflusst. Aufgrund der bekannten guten mechanischen Eigenschaften und insbesondere des Reinigungseffektes infolge oberflächlich abstehender Härchen soll die Schutzhülle aus Vliesstoff bestehen.

Die Aufgabe wird gelöst durch die im Patentanspruch wiedergegebene Schutzhülle. Es ist wesentlich, dass diese aus bindemittelfreiem Vliesstoff besteht, der zweckmässig punktverschweisst ist. Bevorzugt werden Polypropylen, Polyester und/oder Viskosevliesstoffe. Gut geeignet sind auch Vliesstoffe aus Polyamid.

Die Fasern des Vliesstoffes sind elektrisch leitfähig. Das elektrisch leitfähige Material wird der Faser durch Einspinnen einverleibt. Verwendet wird feinverteilter Russ, der in Mengen von 20 bis 40 Gew.%, bezogen auf das Gesamtgewicht der Faser, eingesponnen ist. Es ist wesentlich, dass die elektrisch leitfähigen Fasern in einer solchen Menge vorhanden sind, dass der Oberflächenwiderstand des Vliesstoffes der Schutzhülle kleiner ist als $10^9$ Ohm. Dieser Oberflächenwiderstand muss bei allen Temperaturen, d.h. bis mehr als 100 °C gewährleistet sein.

Der spezifische Widerstand der erfindungsgemäss eingesetzten Fasern liegt bei etwa $10^7$ Ohm pro cm und dtex. Bevorzugt werden Fasern einer Stärke von 3 bis 6 dtex.

Die Schutzhülle aus derartigen Fasern ist mechanisch und thermisch widerstandsfähig und reagiert nicht mit dem empfindlichen magnetischen Datenträger. Der angegebene Oberflächenwiderstand von weniger als $10^9$ Ohm, zweckmässig sogar weniger als $10^6$ Ohm, liegt innerhalb des gesamten Temperaturbereiches vor und ist unabhängig von der Luftfeuchtigkeit. Bei besonders empfindlichen Datenträgern empfiehlt sich die Verwendung weicher Vliesstoffe aus Viskosefasern. Falls erwünscht, können elektrisch nicht leitfähige Fasern zugemischt werden, wenn sichergestellt ist, dass der Oberflächenwiderstand des Vliesstoffes aufgrund der elektrisch leitfähigen Fasern bei dem vorliegenden Klima in dem angegebenen Bereich liegt. Eine nachträgliche Ausrüstung mit einem Antistatikum entfällt genauso wie die üblicherweise zugesetzten Bindemittel bzw. feinverteilten elektrisch leitfähigen Materialien. Beim Einsatz im Floppy disk Liner ist keine Beschädigung der Magnetfolie zu befürchten. Zur Verstärkung wird der Vliesstoff der Schutzhülle auf der Aussenseite zweckmässig mit einer Verstärkung aus Papier oder Kunststoff-Folie versehen, die vorzugsweise aufkaschiert ist.

Die nachfolgenden Beispiele dienen zur Erläuterung der Erfindung, ohne dass diese hierdurch beschränkt wird.

### Beispiel 1

Eine Fasermischung, bestehend aus 50 Gew.% Polyesterfasern 1,7 dtex, 40 mm Schnittlänge und 50 Gew.% Viskosefasern 3,3 dtex, 60 mm Schnittlänge, die durch Einspinnen von 30 Gew.% feinverteiltem Russ leitfähig gemacht wurden (die Gewichtsprozente Russ sind bezogen auf das Gesamtgewicht der gefüllten Viskosefasern) werden auf einer Karde gemischt und über einer Krempelanlage zu einem Vlies gelegt. Die Verfestigung des Vlieses erfolgt durch Punktverschweissen mit Hilfe eines beheizten Kalanders mit entsprechend gravierter Walze. Der Vliesstoff weist ein Gewicht von 50 g/m² auf und hat einen Oberflächenwiderstand von 10³ Ohm. Aus diesem Vliesstoff wird eine abreibfeste Hülle für einen magnetischen Datenträger (Floppy disk) gefertigt. Die Hülle weist auch nach einer dreimonatigen Lagerung bei 120 °C keine nachteiligen Veränderungen auf.

Beispiel 2

Es wird ein Vliesstoff hergestellt aus einer Faserabmischung, bestehend aus 45 Gew.% Polypropylenfasern, 3,3 dtex, 60 mm Schnittlänge und 20 Gew.% Viskosefasern, die 30 Gew.% eingesponnenen feinverteilten Russ enthalten. Der Mischung werden dann noch 35 Gew.% nicht leitende Viskosefasern zugesetzt. Das Vlies wird punktverschweisst, wie in Beispiel 1 angegeben, und der erhaltene Vliesstoff weist ein Gewicht von 30 g/m² und einen Oberflächenwiderstand von 10⁴ Ohm auf. Der Vliesstoff wird dann ganzflächig mit Papier kaschiert. Die aus diesem papierbeschichteten Vliesstoff gefertigte Schutzhülle weist ebenfalls nach mehrmonatiger Lagerung bei Temperaturen zwischen 100 und 120 °C keine Veränderung auf.

Beispiel 3

Es wird ein punktverschweisster Vliesstoff aus einer Fasermischung, bestehend aus 50 Gew.% Polyamid 6,6 (1,7 dtex, 40 mm Schnittlänge), 47 Gew.% reiner Viskose (1,7 dtex, 38 mm Schnittlänge) und 3 Gew.% elektrisch leitfähiger Viskose, die wie in Beispiel 1 und 2 beschrieben, durch Einspinnen von feinverteiltem Russ erhalten wurde, hergestellt. Der Vliesstoff weist ein Gewicht von 25 g/m² auf. Es wird mit einer Folie aus Polyethylen kaschiert. Der Oberflächenwiderstand beträgt 10⁷ Ohm. Eine mehrmonatige Lagerung der aus einem solchen Vliesstoff gefertigten Hülle bei Temperaturen zwischen 100 und 120 °C ergibt keine Änderung der mechanischen und elektrischen Eigenschaften.

Beispiel 4

Ein Faservlies aus 80 Gew.% Polyesterfasern (2,2 dtex, 40 mm Schnittlänge) und 20 Gew.% Polyesterfasern, 3 dtex, 60 mm Schnittlänge, die 40 Gew.% leitfähigen feinverteilten Russ durch Einspinnen einverleibt enthalten, wird durch Punktverschweissen verfestigt. Der Vliesstoff weist ein Gewicht von 25 g/m² auf. Der Oberflächenwiderstand beträgt 10⁷ bis 10⁸ Ohm. Aus diesem Vliesstoff wird eine Schutzhülle gefertigt, die bei wechselnden Luftfeuchtigkeitsgehalten bei Temperaturen zwischen 100 und 120 °C mehrere Monate gelagert wird. Es ergeben sich keine negativen mechanischen und elektrischen Eigenschaften. Die in der Hülle befindliche Magnetfolie ist auch nach mehrmonatiger Lagerung voll funktionsfähig.

## Patentansprüche

1. Abriebfeste Schutzhülle für einen Informationsträger, insbesondere für einen magnetischen Datenträger, die besteht aus einem bindemittelfrei nur durch punktförmiges thermisches Verschweissen verfestigten, antistatischen Vliesstoff mit einem Oberflächenwiderstand unter 10⁹ Ohm bis zu Temperaturen über 100 °C, wobei der Vliesstoff elektrisch leitfähige Polypropylen-, Polyester-, Viskose- und/oder Polyamid-Fasern enthält, die 20 bis 40 Gew.%, bezogen auf das Gesamtgewicht, an eingesponnenem feinverteilten Russ enthalten.

2. Abriebfeste Schutzhülle nach Anspruch 1, dadurch gekennzeichnet, dass der Vliesstoff aussenseitig mit einer verstärkend und versteifend wirkenden, ganzflächigen Beschichtung aus Papier oder Kunststoff-Folie versehen ist.

3. Abriebfeste Schutzhülle nach Anspruch 2, dadurch gekennzeichnet, dass die Beschichtung aufkaschiert ist.

## Claims

1. An abrasion-resistant sleeve for an information carrier, in particular for a magnetic data carrier, comprising an antistatic nonwoven fabric which has been consolidated without a binder by pointlike thermal welding only, which has a surface resistance of less than 10⁹ ohms at up to temperatures above 100 °C, and contains electroconductive polypropylene, polyester, viscose and/or polyamide fibres which contain from 20 to 40% by weight, based on the total weight, of finely divided carbon black incorporated during spinning.

2. An abrasion-resistant sleeve according to Claim 1, characterized in that the nonwoven fabric has been provided on the whole of the outer surface with a reinforcing and stiffening coating of paper or a plastics film.

3. An abrasion-resistant sleeve according to Claim 2, characterized in that the coating has been applied by laminating.

## Revendications

1. Enveloppe de protection résistant à l'usure pour un support d'informations et, en particulier, pour un support d'informations magnétiques, qui est constituée d'une nappe de fibres antistatiques sans liant et renforcée uniquement par soudage thermique par points, qui présente une résistance superficielle inférieure à 10⁹ ohms jusqu'aux températures dépassant 100 °C, ladite nappe de fibres contenant des fibres électriquement conductrices de polypropylène, de polyester, de viscose et/ou de polyamide, auxquelles on incorpore par filage de 20 à 40% en poids de suie finement divisée rapportés au poids total.

2. Enveloppe de protection résistant à l'usure selon la revendication 1, caractérisée en ce que la nappe de fibres est pourvue extérieurement et sur toute sa surface d'un revêtement en papier ou en feuille de plastique qui augmente sa solidité et sa rigidité.

3. Enveloppe de protection résistant à l'usure selon la revendication 2, caractérisée en ce que ce revêtement reçoit une décoration au pochoir.